# EUROPÄISCHE PATENTSCHRIFT

(11) **EP 0 448 812 B1**
(45) Veröffentlichungstag und Bekanntmachung des Hinweises auf die Patenterteilung: **24.08.1994**
(21) Anmeldenummer: 90124640.5
(22) Anmeldetag: 18.12.1990
(51) Int. Cl.: E21B 49/02, E21B 25/00, G01N 1/06, G01N 33/24

(54) **Schneideinrichtung für Bodenproben und Verfahren zum schichtweisen Schneiden einer Bodenprobe**
Apparatus and method for cutting a soil sample into slices
Dispositif et procédé pour découper en tranches un échantillon de sol

(30) Priorität: 28.03.1990 DE 4009993
(43) Veröffentlichungstag der Anmeldung: 02.10.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Steinhanses, Wolfgang, W-5940 Lennestadt 1 (DE); Kördel, Werner, Dr., W-5948 Schmallenberg 12 (DE)

(56) Entgegenhaltungen:
- EP-A- 0 175 480
- DE-C- 3 901 077
- DE-U- 8 910 071
- US-A- 2 049 580
- US-A- 2 556 404
- US-A- 3 884 563
- US-A- 4 519 592

## Beschreibung

Die Erfindung betrifft eine Schneideinrichtung für Bodenproben, insbesondere für gewachsene Bodenmonolithe aus einer Freiland-Lysimeteranlage sowie ein Verfahren zum schichtweisen Schneiden einer in einem Probenbehälter aufgenommenen Bodenprobe nach der Gattung der Ansprüche 1 und 18.

In der organischen und anorganischen Umweltanalytik werden u.a. Probleme der Identifizierung und Quantifizierung von Schadstoffen in der Ökosphäre untersucht. Hierzu werden größere Bodenproben benötigt, um das Verhalten und die Wege einer Substanz im Boden zu analysieren.

Im ungestörten Gefüge eines Bodenmonoliths kann man hierbei Kenntnisse über Verbleib, Metabolismus, Abbau und Anreicherung der Substanzen im Boden gewinnen. Aussagekräftige und reproduzierbare Daten werden durch sogenannte Freiland-Lysimeter erhalten, in denen gewachsene Bodenmonolithe von 0,2 bis 1,5 m³ Volumen nach ihrer Entnahme aus dem natürlichen Bodenverband eingesetzt werden. Es wird z.B. das Sickerwasser aus einem solchen Bodenmonolithen in dem Lysimeter aufgefangen und weiteren Analysen unterzogen. Das Gefüge eines solchen Bodenmonolithen darf im Zuge der Entnahme aus dem natürlichen Bodenverband sowie in Verbindung mit den Lysimeterversuchen bzw. in Verbindung mit weiteren Bodenanalysen, die sich an die Lysimeterversuche anschließen, nicht gestört werden.

Um im ungestörten Gefüge eines Bodenmonoliths die Ergebnisse aus der Aufnahme der Bodenprobe in dem Lysimeter und damit das Verhalten und die Wege einer Substanz im Boden unmittelbar im ungestörten Gefüge der Bodenprobe bzw. des Bodenmonolithen zu untersuchen, um Kenntnis über Verbleib, Metabolismus, Abbau und Anreicherung der Substanzen im Boden zu gewinnen, ist es wünschenswert, Mischproben von genau definierten Schichten eines zerlegten Bodenmonolithen entspechenden Laboranalysen zu unterziehen.

Entnahmegeräte zur Entnahme von Bodenproben für verhältnismäßig kleine Volumina sind aus DIN 19672 bekannt. Derartige Bodenprobenentnahmegeräte eignen sich jedoch nicht zur Entnahme großer Volumina zur lysimetrischen Untersuchung von gewachsenen Bodenmonolithen.

Durch die DE-C-39 01 077 wurde ein Entnahmegerät für Bodenproben vorgeschlagen, durch das es möglich ist, gewachsene Bodenmonolithe mit einem Volumen von ca. 1,5 m³ zu entnehmen, wobei eine Stechkammer des Entnahmegerätes in Verbindung mit einer perforierten Grundplatte zugleich als Probenbehälter und zum Einsatz der Bodenprobe in ein Lysimeter dient. Für die im Anschluß an eine Freiland-Lysimeteruntersuchung und -behandlung eines gewachsenen Bodenmonolithen erforderlichen Zerlegung desselben in definierte Schichten für weitere Laboranalysen des Bodenmateriales ist jedoch bisher eine entsprechende Schneideinrichtung nicht bekannt.

Der Erfindung liegt daher die Aufgabe zugrunde, eine Schneideinrichtung der eingangs genannten Art zu schaffen, in der eine Bodenprobe, insbesondere ein gewachsener Bodenmonolith, der zuvor in einer Freiland-Lysimeteranlage speziellen Untersuchungen gedient hat, in einzelne Schichten zerteilt werden kann, um diese Bodenschichten weiteren Laboruntersuchungen zugänglich zu machen.

Der Erfindung liegt ferner die Aufgabe zugrunde ein Verfahren zum schichtweisen Schneiden einer in einem Probenbehälter enthaltenen Bodenprobe anzugeben, durch das ohne Störung des Gefüges auch Bodenproben, die ein verhältnismäßig großes Volumen besitzen, zuverlässig und in unkomplizierter Handhabung in einzelne Schichten zerlegt werden können.

Erfindungsgemäß wird die erstgenannte Aufgabe mittels einer Schneideinrichtung der eingangs genannten Art gelöst durch einen stationären Schneidtisch mit einer Messerplattenanordnung zur Aufnahme eines die Bodenprobe enthaltenden, eine entfernbare Grundplatte aufweisenden Probenbehälter und eine höhenverstellbare Absetzeinrichtung für die Bodenprobe unterhalb der Messerplattenanordnung.

Vorzugsweise ist zum exakten Positionieren eines Probenbehälters in der Schneideinrichtung und zugleich zur Aufnahme eventueller Seitenkräfte während des Schneidvorganges ein Zentrierring oberhalb der Messerplattenanordnung des Schneidtisches angeordnet, der seitlich mit dem Schneidtisch verbunden ist.

Es wird ferner bevorzugt, daß die Messerplattenanordnung zwei opponierend bewegbare Messerplatten aufweist, die vorzugsweise in Verbindung mit Führungsschienen, die an den Messerplatten angeschweißt sind, in einer Profilschienenanordnung, vorzugsweise U-Profilschienen des Schneidtisches, geführt sind.

Eine transporttechnisch günstige Ausgestaltung der Absetzeinrichtung, die zugleich ein definiertes Abtrennen von Bodenschichten von der Bodenprobe in wahlweise gewünschter Schichtdicke ermöglicht, wird dadurch erreicht, daß die Absetzeinrichtung ein unter einer Probenaufnahmeöffnung, die durch die Messerplattenanordnung verschließbar ist, angeordneter Hubtisch, vorzugsweise Hubwagen ist, mit einer vertikal beweglichen Tragplatte, abgestützt an einer Spindel-Hubvorrichtung.

Erfindungsgemäß zeichnet sich ferner ein Verfahren zum schichtweisen Schneiden einer in einem Probenbehälter aufgenommenen Bodenprobe dadurch aus, daß der Probenbehälter auf einer in Verbindung mit einem Schneidtisch vorgesehenen, zunächst geschlossenen Trennvorrichtung, die eine Probenaufnahmeöffnung verschließt, aufgesetzt wird, anschließend der Probenbehälter bodenseitig geöffnet wird und die Trennvorrichtung unter der Bodenprobe seitlich weggezogen wird, so daß die Bodenprobe unter partieller Aufnahme in der Probenaufnahmeöffnung auf einer unter dieser sich befindenden Tragplatte aufgenommen wird, die Tragplatte um ein der Dicke der abzutrennenden Bodenschicht entsprechendes Maß abgesenkt wird und anschließend durch seitliches Einschieben der Trennvorrichtung die bodenseitige Bodenschicht von der Bodenprobe abgetrennt wird und anschließend die Bodenschicht mit der Tragplatte aus dem Bereich unter der Trennvorrichtung abtransportiert wird.

Weitere, bevorzugte Ausgestaltungen des Erfindungsgegenstandes sind in den abhängigen Ansprüchen dargelegt.

Durch die Erfindung ist es in vorteilhafter Weise möglich, eine Analyse einer genau definierten Schicht von einer Bodenprobe, insbesondere einem gewachsenen Bodenmonolithen, der vorher in einer Freiland-Lysimeteranlage untersucht bzw. behandelt wurde, vorzunehmen.

Die Erfindung wird nachstehend anhand eines Ausführungsbeispieles und zugehöriger Zeichnungen näher erläutert. In diesen zeigen:
- Fig. 1: einen Probenbehälter mit einer Bodenprobe nach Entnahme aus einer Lysimeter-Anlage im Halbschnitt,
- Fig. 2: einen Querschnitt des Probenbehälters nach Fig. 1,
- Fig. 3: eine Schneideinrichtung nach einem Ausführungsbeispiel der Erfindung in schematischer Darstellung und mit einem aufgesetzten Probenbehälter mit einer Bodenprobe in einer ersten und in einer zweiten Arbeitsphase,
- Fig. 4: eine Draufsicht einer Absetzeinrichtung der Schneideinrichtung nach der vorliegenden Erfindung mit abgenommener Tragplatte,
- Fig. 5: eine Seitenansicht der Absetzeinrichtung der Schneideinrichtung mit Tragplatte nach Fig. 4.

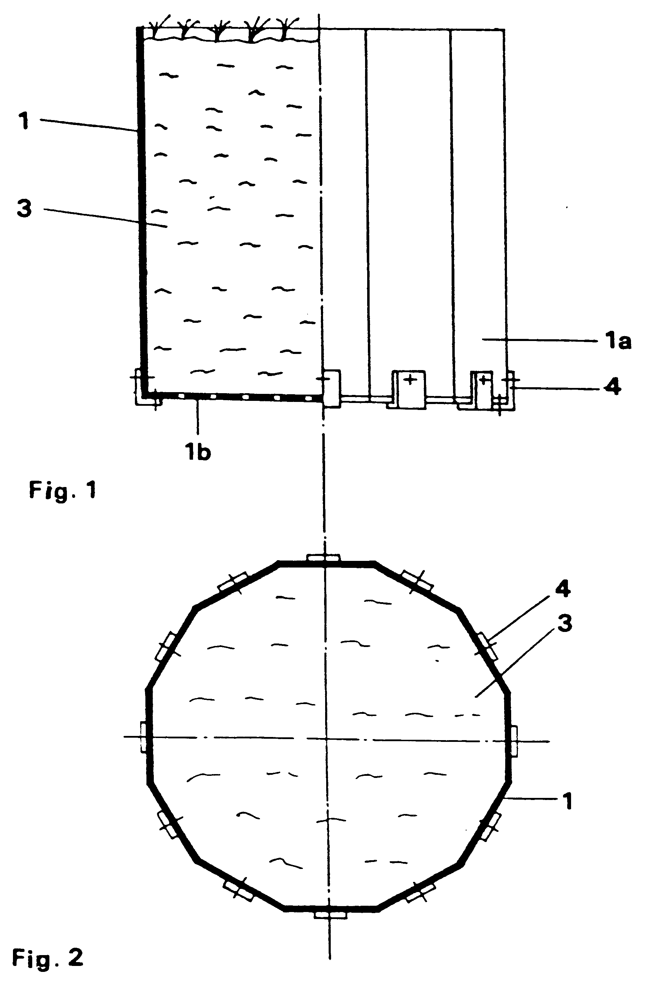

Fig. 1 zeigt einen Probenbehälter 1 mit einer Stechkammer eines Bodenprobenentnahmegerätes, der durch eine perforierte Grundplatte 1b bodenseitig abgeschlossen ist und eine Bodenprobe 3 enthält, die mit oder ohne Bewuchs sein kann. Der Probenbehälter 1 weist einen Edelstahlzylinder 1a mit einer polygonalen Konfiguration auf, die vorzugsweise zwölf gleiche Seitenflächen umfaßt, wie dies insbesondere aus der Querschnittsdarstellung gemäß Fig. 2 ersichtlich ist. Der Probenbehälter 1 besitzt eine Höhe von zwischen 0,2 und 1,5 m sowie einen Durchmesser von ca 1,1 m. Der polygonale Edelstahlzylinder 1a besitzt Grundflächen von ca. 1 m² und ist bodenseitig durch die Grundplatte 1b verschlossen, die durch zwölf Montagewinkel 4 an dem Probenbehälter 1 gehalten ist.

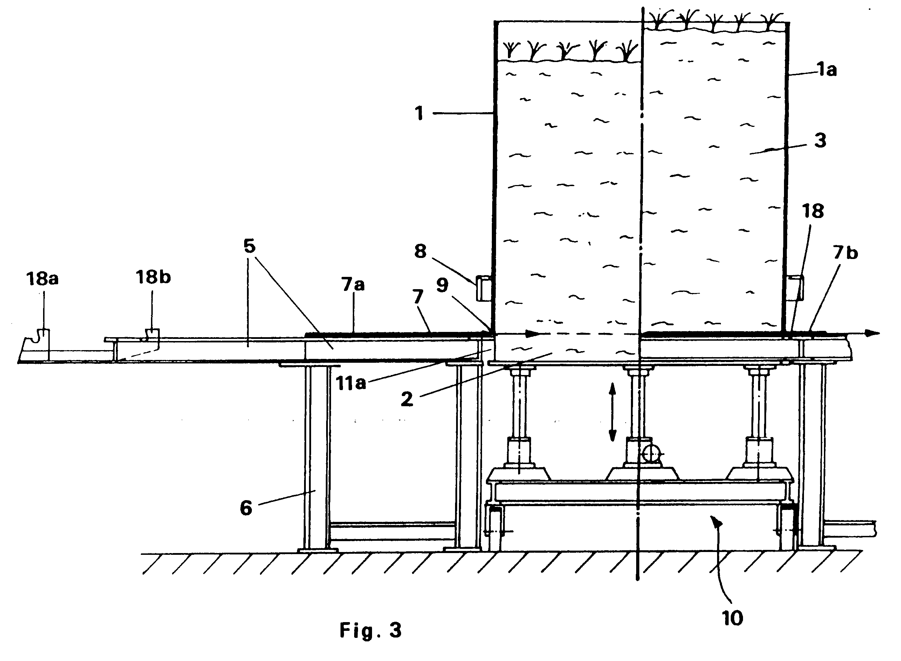

Vor dem Aufsetzen auf einen Schneidtisch 5 einer Schneideinrichtung gemäß Fig. 3 wird die Mehrzahl der Montagewinkel 4 entfernt, so daß vorzugsweise drei in ihrer Anordnung um 120^{o} versetzt vorgesehene Montagewinkel 4 zur Halterung der Grundplatte 1b an dem Probenbehälter 1 verbleiben.

Eine Schneideinrichtung nach einem Ausführungsbeispiel der vorliegenden Erfindung ist in Fig. 3 gezeigt, und umfaßt im wesentlichen einen Schneidtisch 5 mit einem Grundrahmen 6, der vorzugsweise aus U-Profilchienen besteht, wobei der Schneidtisch 5 an seiner Oberseite eine Messerplattenanordnung 7 aufweist, die zwei opponierend gegenüberliegende Messer 7a, 7b umfaßt und die durch in der schematischen Darstellung gemäß Fig. 3 nicht näher gezeigte Führungsschienen in U-Profilschienen des Schneidtisches 5 horizontal verschiebbar gelagert sind. Durch die Messerplattenanordnung 7 ist eine Probenaufnahmeöffnung 9 des Schneidtisches 5 je nach Position der Messerplattenanordnung 7 entweder abgedeckt und verschlosssen (in Fig. 3 rechte Seite der Darstellung, Messer geschlossen) oder freigegeben und offen (in Fig. 3 linke Seite der Darstellung Messer offen, Bodenprobe auf Tragplatte 11 abgesenkt). Mit dem Schneidtisch 5 ist oberhalb der Messerplattenanordnung 7 ein Zentrierring 8 seitlich verbunden, der auf die Aufnahmeöffnung 9 zentriert ist und dem ausgerichteten Aufsetzen des Probenbehälters 1 auf den Schneidtisch 5 sowie der Aufnahme von Querkräften im Zusammenhang mit einem Schneidvorgang zum Abtrennen einer Bodenschicht von der übrigen Bodenprobe 3 dient.

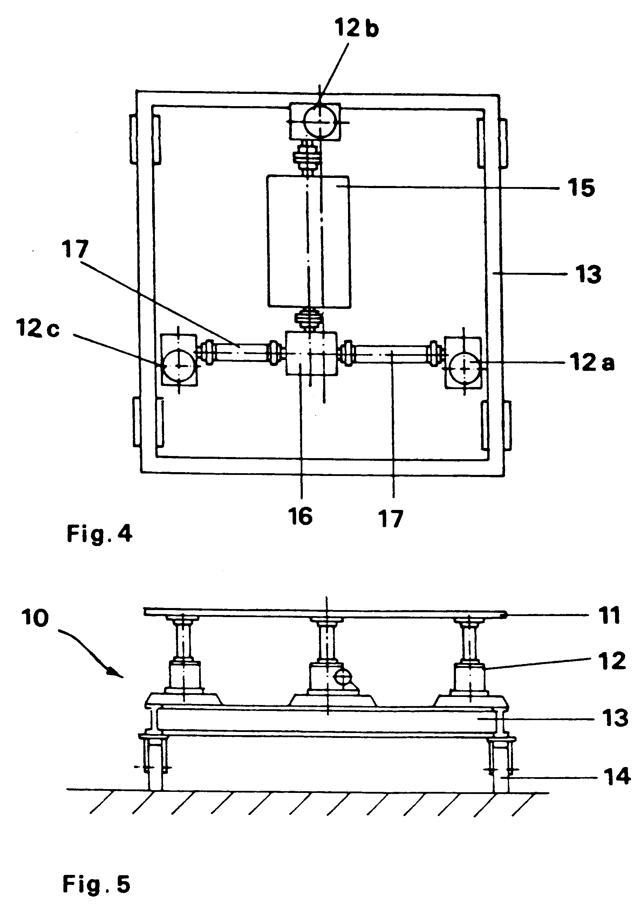

Unterhalb der Probenaufnahmeöffnung 9 des Schneidtisches 5 ist eine Absetzeinrichtung 10 vorgesehen, die eine Tragplatte 11 aufweist und anhand der Fig. 4 und 5 nachstehend noch näher erläutert wird. Mit dem oberen Führungsbereich des Schneidtisches 5 sind ortsfest Festlager 18a, b beiderseits der beiden Messerplatten 7a und 7b vorhanden, die dem Einhängen eines Greifzuges dienen, um Zugkräfte zur Entfernung der in Fig. 3 nicht gezeigte Bodenplatte 1b bei der bodenseitigen öffnung des Probenbehälters 1 aufzunehmen bzw. eine Zugbetätigung der Messerplatten 7a und 7b zum Schneiden der Bodenprobe 3 in ihrer horizontalen Bewegungsebene zu ermöglichen.

Unter Bezugnahme auf die Fig. 4 und 5 wird nachstehend die Absetzeinrichtung 10, die unter die Aufnahmeöffnung 9 des Schneidtisches 5 eignesetzt wird, erläutert. Die Absetzeinrichtung wird durch einen Hubwagen 10 realisiert, der an seiner Oberseite eine Tragplatte 11 aufweist. Diese Tragplatte 11 ist vertikal beweglich auf einer Spindel-Hubvorrichtung 12 abgestützt, die drei, vorzugsweise auf den Eckpunkten eines gleichschenkligen Dreieckes angeordnete Spindel-Hubelemente 12a, 12b, 12c aufweist. Die Spindel-Hubelemente 12a, 12b, 12c stützen die Tragplatte 11 auf einem Grundrahmen-Unterteil des Hubwagens 10, bestehend aus Doppel-T-Profilträgern ab. Der Hubwagen besitzt vier Schwerlastrollen 14, die eine leichte Handhabbarkeit desselben beim Einfahren unter den Schneidtisch 5 der Schneideinrichtung sowie beim Abtransport einer Bodenschicht der Bodenprobe 3 gewährleisten.

Zur vertikalen Höhenverstellung der Tragplatte 11 durch die Spindel-Hubelemente 12a, 12b, 12c, treibt ein Drehstrom-Normmotor 15 über eine Abtriebswelle das Spindel-Hubelement 12b unmittelbar sowie die Spindel-Hubelemente 12a, 12c über ein Kegelradgetriebe 16 und Zwei hochelastische Gelenkwellen 17 an.

Mit Hilfe der Spindel-Hubvorrichtung 12 und einer Millimeter-Anzeige (hier nicht dargestellt) kann die Tragplatte 11 mit aufgesetzter Bodenprobe 3 exakt in die vorbestimmte Hohenposition eingestellt werden. Die Position der Spindel-Hubvorrichtung 12 des Hubwagens 10 unter dem Schneidtisch 5 der Schneideinrichtung (s. Fig. 3) ist während des Schneidvorganges durch eine - hier nicht gezeigte - Verriegelungsvorrichtung gesichert. Die Tragplatte 11 ist in Verbindung mit der Spindel-Hubvorrichtung 12 so ausgelegt, daß sie Bodenproben 3 mit einer Last von ca. 3 000 kg aufnehmen kann.

Das erfindungsgemäße Verfahren zum schichtweisen Schneiden der in dem Probenbehälter aufgenommenen Bodenprobe bzw. des gewachsenen Bodenmonolithen wird nachfolgend inbesondere unter Bezugnahme auf Fig. 3 erläutert.

Zunächst wird der Probenbehälter 1 mit der Grundplatte 1b, wie in Fig. 1 gezeigt, dem Lysimetersystem entnommen und zur Herstellung der Probenschnitte der Schneideinrichtung gemäß Fig. 3, zugeführt. Die Schneideinrichtung mit dem Schneidtisch 5, der Messerplattenanordnung 7 und des als Absetzeinrichtung wirksamen Hubwagen 10 ist eine Einrichtung, in der gewachsene Bodenproben oder Bodenmonolithe nach einem Freiland-Lysimeterversuch in einzelne Schichten zur weiteren Laboranalyse getrennt werden können.

Der aus der Lysimeter-Anlage entnommene Probenbehälter 1, bestehend aus dem Edelstahlzylinder 1a und der mit zwölf Montagewinkeln 4 befestigten, perforierten Grundplatte 1b, der eine zwölfeckige Konfiguration mit einer ca. 1 m² großen Grundfläche besitzt, wird vor dem Aufsetzen auf den Schneidtisch 5 so vorbereitet, daß neun Montagewinkel 4 demontiert werden, so daß die perforierte Grundplatte 1b nur noch über drei, um 120^{o} versetzt angeordnete Montagewinkel 4 mit des Edelstahlzylinder 1b des Probenbehälters 1 verbunden ist.

Der Probenbehälter 1 wird mittels einer Krananlage von oben durch Führung des Zentrierrings 8 auf das Schneidgerät gesetzt. Nunmehr werden die verbliebenen drei Montagewinkel 4 gelöst und entfernt. Vorher wird zum Entfernen der Grundplatte 1b als Demontagehilfe ein Flacheisen (Platte) (Vorzugsmaße 60 x 400 x 6), das mit Stiften versehen ist, die im Raster der Perforation der Grundplatte 1b angeordnet sind, auf die geschlossenen Messerplatten 7a, 7b untergelegt, derart, daß die Stifte des Flacheisens am äußersten Rand der Grundplatte 1b in die Perforation derselben eingreifen. Mit Hilfe eines hier nicht gezeigten Greifzuges, der in das Festlager 18a des Schneidtisches 5 und in eine Bohrung des Flacheisens eingehängt wird, kann nunmehr die Grundplatte 1b durch seitliches Herausziehen, gegebenenfalls unter geringfügigem Anheben des Probenbehälters 1, entfernt werden.

Die Bodenprobe 3 ruht nunmehr unmittelbar auf den geschlossenen Messerplatten 7a, 7b, die im Zentrum des Schneidtisches 7 über der Probenöffnung 9 angeordnet sind, auf, wie dies auf der rechten Seite in Fig. 3 dargestellt ist.

Nach Unterfahren des Schneidtisches 5 durch den Hubtisch 10 wird, wie in Fig. 3 gezeigt, die Tragplatte 11 des Hubtisches 10 auf das gewünschte Maß für die Schichtdicke der zu entnehmenden Bodenschicht 2 hochgefahren. Auf der Tragplatte 11 befindet sich ein der Schichtdicke der Bodenschicht 2 in seiner Höhe entsprechender, mit der Umrißkonfiguration des Probenbehälters 1 formgleicher Aufnahmering zur Aufnahme der Probenbodenschicht 2 (hier nicht gezeigt), der in Fig. 3 durch das Bezugszeichen 11a lediglich angedeutet ist.

Für den Absenkvorgang der Bodenprobe 3 werden nunmehr auf beiden Seiten der Schneideinrichtung bzw. an beiden Seiten des Schneidtisches 5 je ein Greifzug in das Festlager 18b und in die jeweilige Messerplatte 7a bzw. 7b eingehängt und beide Messerplatten 7a, 7b werden gleichmäßig unter dem Probenbehälter 1 seitlich weggezogen. Die gesamte Bodenprobe 3 rutscht durch den Probenbehälter 1 und die in Bezug auf die Konfiguration des Probenbehälters 1 vorzugsweise formgleiche Probenaufnahmeöffnung 9, die in die Tischplatte 18 des Schneidtisches 5 eingearbeitet ist, in den Ring auf die Tragplatte 11 der Spindel-Hubvorrichtung 12 des Hubwagens 10. Dieser Zustand ist in der linken Hälfte in Fig. 3 verdeutlicht.

Das Abschneiden der Bodenschicht 2 von der übrigen Bodenprobe 3 wird ausgeführt, indem die Greifzüge umgehängt und seitlich zwischen den Messerplatten 7a, 7b montiert werden, um die Messerplatten 7a, 7b wieder opponierend aufeinander zu zusammenziehen zu können und hierdurch eine Probenschicht 2 abzutrennen, wie dies durch eine unterbrochene Linie in der linken Hälfte in Fig. 3 angedeutet ist. Zu diesem Zweck wird der Probenbehälter 1 um die Dicke der Messerplatten 7a, 7b mittels einer hier nicht gezeigten Kraneinrichtung angehoben. Die Messerplatten 7a, 7b werden anschließend mit dem Greifzügen unter Durchtrennen der Bodenprobe 3 zur Separation der Bodenschicht 2 wieder unter Verschluß der Probeaufnahmeöffnung 9 zusammengezogen und trennen die Bodenschicht 2 von der Bodenprobe 3 ab.

In Verbindung mit einer geringfügig veränderten Gestaltung der Tragplatte 11 des Hubwagens 10 und Versehen derselben mit einer Seitenführung bis in eine obere Endlage der Tragplatte 11, die einer Position geringfügig unterhalb der Messerplatten 7a, 7b entsprechen könnte, wäre es auch möglich, die Tragplatte 11 bis unmittelbar unter die Messerplatten 7, 8 zu fahren und anschließend unter Absetzen der Bodenprobe 3 auf die Tragplatte die Messerplatten 7a, 7b zu öffnen und sodann unter Eintauchen der Tragplatte 11 in die an die Konfiguration des Probenbehälters 1 angepaßte Seitenführung derselben bei gleichzeitigem Rutschen der Bodenprobe 3 in dem Probenbehälter 1 die Tragplatte 11 nach unten abgzusenken, bis eine gewünschte Schichtdicke erreicht ist, um anschließend unter Schneidbetätigung der Messerplatten 7a, 7b die gewünschte Bodenschicht 2 von der übrigen Bodenprobe 3 abzutrennen.

Die Horizontalführung der Messerplatten 7a, 7b wird dadurch gewährleistet, daß an den Messerplatten angeschweißte Führungsschienen in U-Profilschienen gleitbar sind und eine Verlagerung der Messerplatten 7a, 7b in einer Richtung senkrecht zu ihrer Verschiebungsrichtung nach oben und unten vermieden wird.

Bei inhomogenem Bodengefüge im Trennbereich der Bodenprobe 3 können ungleiche Vorschubgeschwindigkeiten der Messerplatten 7a, 7b auftreten. Um auch In diesem Fall ein formschlüssiges Abschneiden der Bodenschicht 2 von der übrigen Bodenprobe 3 zu gewährleisten, wird vorzugsweise die geschlossene Endlage der Messerplatten 7a, 7b dadurch erreicht, daß sie gegen einen, in der schematischen Darstellung gemäß Fig. 3 nicht gezeigten Anschlag gezogen werden.

Überdies ist der Zentrierring 8 wirksam, um ein Verschieben des Probenbehälters 1 während des Schneidvorganges zu verhindern. Der Zentrierring 8 ist vorzugsweise an beiden Seiten des Schneidtisches 7 angeschraubt.

Die nunmehr auf der Tragplatte 11 des Hubtisches 8 liegende, abgeschnittene Bodenschicht 2 der Bodenprobe 3 ist auf der Tragplatte 11 in dem auf dieser liegenden Ring aufgenommen. Die Tragplatte 11 wird nunmehr unter Betätigung des Drehstrommotors 15 durch die Spindel-Hubelemente 12a, 12b, 12c abgesenkt und der Hubwagen 10 wird unter dem Schneidtisch 5 hervorgezogen. Die so abgeschnittene Bodenschicht 2 ist nunmehr frei zugänglich und eine Mischprobe derselben kann entnommen und weiteren Laboruntersuchungen zugeführt werden.

Die Dicke der Bodenschicht 2 kann nach entsprechenden Vorgaben gewählt werden, wobei die Tragplatte 11 mit Hilfe der Spindel-Hubvorrichtung 12 stufenlos von der Schneidebene an gemessen bis zu vorzugsweise 250 mm nach unten positioniert werden kann. In Verbindung mit dem oben alternativ erläuterten Einsatz der Spindel-Hubvorrichtung unter Verwendung einer paßgenauen Seitenführung der Tragplatte 11 können auch größere Schichtdicken abgetrennt werden.

## Patentansprüche

1. Schneideinrichtung für Bodenproben mit einem Grundrahmen, einer Aufnahmeeinrichtung für die Bodenprobe, sowie eine Trennvorrichtung zum Abtrennen einer Bodenschicht von der Bodenprobe, insbesondere für Bodenmonolithe aus einer Freiland-Lysimeteranlage, **gekennzeichnet durch** einen stationären Schneidtisch (5) mit einer Messerplattenanordnung (7) zur Aufnahme eines die Bodenprobe (3) enthaltenden, eine entfernbare Grundplatte (1b) aufweisenden Probenbehälters (1) und eine höhenverstellbare Absetzeinrichtung (10) für die Bodenprobe (3) unterhalb der Messerplattenanordnung (7).

2. Schneideinrichtung nach Anspruch 1, **dadurch gekennzeichnet,** daß oberhalb der Messerplattenanordnung (7) ein Zentrierring (8) zur Mittenzentrierung des die Bodenprobe (3) enthaltenden Probenbehälters (1) auf die Messerplattenanordnung (7) mit dem Schneidtisch (5) verbunden ist.

3. Schneideinrichtung nach Anspruch 1 oder 2, **dadurch gekennzeichnet,** daß die Messerplattenanordnung (7) zwei opponierende Messerplatten (7a, 7b) aufweist.

4. Schneideinrichtung nach zumindest einem der vorhergehenden Ansprüche 1 bis 3, **dadurch gekennzeichnet,** daß die Messerplatten (7a, 7b), insbesondere durch mit diesen verschweißten Führungsschienen, in einer Profilschienenanordnung des Schneidtisches (5) oberhalb einer Tischplatte (18) des Grundrahmens (6) geführt sind.

5. Schneideinrichtung nach zumindest einem der vorhergehenden Ansprüche 1 bis 4, **dadurch gekennzeichnet,** daß unterhalb der Messerplattenanordnung (7) in einer Tischplatte (18) des Schneidtisches (5) eine Probenaufnahmeöffnung (9) ausgebildet ist.

6. Schneideinrichtung nach Anspruch 5, **dadurch gekennzeichnet,** daß eine Konfiguration der Probenaufnahmeöffnung (9) einer Konfiguration des Probenbehälters (1) entspricht.

7. Schneideinrichtung nach zumindest einem der vorhergehenden Ansprüche 1 bis 6, **dadurch gekennzeichnet,** daß der Probenbehälter (1) ein polygonaler Rohrkörper mit einem Zylinder (1a) und einer perforierten Grundplatte (1b) ist.

8. Schneideinrichtung nach Anspruch 7, **dadurch gekennzeichnet,** daß die Grundplatte (1b) durch Montagewinkel (4) lösbar mit dem Zylinder (1a) des Probenbehälters (1) verbindbar ist.

9. Schneideinrichtung nach zumindest einem der vorhergehenden Ansprüche 1 bis 8, **dadurch gekennzeichnet,** daß die Absetzeinrichtung ein Hubtisch oder fahrbarer Hubwagen (10) ist.

10. Schneideinrichtung nach Anspruch 9, **dadurch gekennzeichnet,** daß die Absetzeinrichtung eine zumindest vertikal bewegliche Tragplatte (11), abgestützt an einer Hubvorrichtung, vorzugsweise einer Spindel-Hubvorrichtung (12), aufweist.

11. Schneideinrichtung nach Anspruch 10**, dadurch gekennzeichnet,** daß auf der Tragplatte (11) ein Stützring zur Aufnahme der von der Bodenprobe (3) abgetrennten Bodenschicht (2) vorgesehen ist.

12. Schneideinrichtung nach Anspruch 11, **dadurch gekennzeichnet,** daß der Stützring eine Konfiguration aufweist, die derjenigen der Probenaufnahmeöffnung (9) und des Probenbehälters (1) entspricht.

13. Schneideinrichtung nach zumindest einem der vorhergehenden Ansprüche 1 bis 12, **dadurch gekennzeichnet,** daß die Absetzeinrichtung (10) eine Meß- und Anzeigeeinrichtung für eine Höheneinstellung der Tragplatte (11) aufweist.

14. Schneideinrichtung nach zumindest einem der vorhergehenden Ansprüche 8 bis 13, **dadurch gekennzeichnet,** daß eine Position des Hubtisches oder Hubwagens (10) unter dem Schneidtisch (5) während eines Schneidvorganges durch eine Verriegelungsvorrichtung festlegbar ist.

15. Schneideinrichtung nach zumindest einem der Ansprüche 8 bis 14, **dadurch gekennzeichnet,** daß der Hubwagen (10) an einem Grundrahmen-Unterteil (13) vier Schwerlastrollen (14) und in Verbindung mit der Tragplatte (11), abgestützt an dem Grundrahmen-Unterteil (13), drei Spindel-Hubelemente (12a, 12b, 12c) sowie eine Antriebsvorrichtung (15, 16, 17) für die Spindel-Hubelemente (12a, 12b, 12c) aufweist.

16. Schneideinrichtung nach Anspruch 15, **dadurch gekennzeichnet,** daß die Antriebseinrichtung einen Drehstrommotor (15) in Verbindung mit einem Spindel-Hubelement (12b) und einem Kegelradgetriebe (16) aufweist, das über ein Paar Gelenkwellen (17) mit den weiteren Spindel-Hubelementen (12a, 12c) verbunden ist.

17. Schneideinrichtung nach Anspruch 15 oder 16, **dadurch gekennzeichnet,** daß die Spindel-Hubelemente (12a, 12b, 12c) an den Eckpunkten eines gleichschenkeligen Dreieckes angeordnet sind.

18. Verfahren zum schichtweisen Schneiden einer in einem Probenbehälter enthaltenen Bodenprobe, insbesondere für gewachsene Bodenmonolithe nach Entnahme aus einer Freiland-Lysimeteranlage, **dadurch gekennzeichnet,** daß der Probenbehälter (1) auf einer in Verbindung mit einem Schneidtisch (5) vorgesehenen, zunächst geschlossenen Trennvorrichtung (7), die eine Probenaufnahmeöffnung (9) verschließt, aufgesetzt wird, anschließend der Probenbehälter (1) bodenseitig geöffnet wird und die Trennvorrichtung (7) unter der Bodenprobe seitlich weggezogen wird, so daß die Bodenprobe (3) unter partieller Aufnahme in der Probenaufnahmeöffnung (9) auf einer unter dieser sich befindenden Tragplatte (11) aufgenommen wird, die Tragplatte (11) um ein der Dicke der abzutrennenden Bodenschicht (2) entsprechendes Maß abgesenkt wird und anschließend durch seitliches Einschieben der Trennvorrichtung die bodenseitige Bodenschicht (2) von der Bodenprobe (3) abgetrennt wird und anschließend die Bodenschicht (2) mit der Tragplatte (11) aus dem Bereich unter der Trennvorrichtung abtransportiert wird.

19. Verfahren nach Anspruch 18, **dadurch gekennzeichnet,** daß die Bodenschicht (2) der Bodenprobe (3) auf der Tragplatte (11) unter gleichzeitiger Seitenführung der Bodenschicht (2) aufgenommen wird.

20. Verfahren nach Anspruch 18 oder 19, **dadurch gekennzeichnet,** daß die Tragplatte (11) beabstandet zu der Trennvorrichtung (7) unterhalb derselben angeordnet wird und die Trennvorrichtung (7) ein translatorisch opponierend relativ zueinander bewegbares Messerplattenpaar (7a, 7b) aufweist, durch das nach seitlichem Öffnen die Bodenschicht (2) der Bodenprobe (3) durch die Probenaufnahmeöffnung (9) auf die Tragplatte (11) nach unten geführt und auf dieser umfangsseitig aufgenommen wird, das Messerplattenpaar (7a, 7b) anschließend unter Abtrennung der Bodenschicht (2) von der übrigen Bodenprobe (3) bis zum Anschlag der Messerplatten (7a, 7b) aneinander eingeschoben und anschließend die Tragplatte (11) mit der Bodenschicht (2) abgesenkt und abgefördert wird.

## Claims

1. Cutter arrangement for soil samples having a base frame, a receiving device for the soil sample, and a separating device for separating off a soil layer from the soil sample, particularly for soil monoliths from an open land lysimeter installation, characterised by a a stationary cutter table (5) with an arrangement of cutter plates (7) for accommodating a sample container (1) containing the soil sample (3) and having a removable base plate (1b), and a vertically-adjustable depositor (10) for the soil sample (3) beneath the cutter plate arrangement (7).

2. Cutter arrangement according to claim 1, characterised in that there is connected to the cutter table (5), above the cutter plate arrangement (7), a centring ring (8) for centring the sample container (1) containing the soil sample (3) on the cutter plate arrangement (7).

3. Cutter arrangement according to claim 1 or 2, characterised in that the cutter plate arrangement (7) has two opposed cutter plates (7a, 7b).

4. Cutter arrangement according to at least one of the preceding claims 1 to 3, characterised in that the cutter plates (7a, 7b) are guided, especially by track rods welded thereto, in a shaped rail arrangement of the cutter table (5) above a table plate (18) of the base frame (6).

5. Cutter arrangement according to at least one of the preceding claims 1 to 4, characterised in that a sample-holding opening (9) is formed beneath the cutter plate arrangement (7) in a table plate (18) of the cutter table (5).

6. Cutter arrangement according to claim 5, characterised in that a configuration of the sample-holding opening (9) corresponds to a configuration of the sample container (1).

7. Cutter arrangement according to at least one of the preceding claims 1 to 6, characterised in that the sample container (1) is a polygonal tubular member with a cylinder (1a) and a perforated base plate (1b).

8. Cutter arrangement according to claim 7, characterised in that the base plate (1b) is detachably connected to the cylinder (1a) of the sample container (1) by assembly angles (4).

9. Cutter arrangement according to at least one of the preceding claims 1 to 8, characterised in that the depositor is a lifting table or movable lift carriage (10).

10. Cutter arrangement according to claim 9, characterised in that the depositor has an at least vertically movable support plate (11) supported on a lifting device, preferably a spindle-operated lifting device (12).

11. Cutter arrangement according to claim 10, characterised in that there is provided on the support plate (11) a support ring for receiving the soil layer (2) separated off from the soil sample (3).

12. Cutter arrangement according to claim 11, characterised in that the support ring has a configuration corresponding to that of the sample-holding opening (9) and of the sample container (1).

13. Cutter arrangement according to at least one of the preceding claims 1 to 12, characterised in that the depositor (10) has a measuring and indicating device for vertical adjustment of the support plate (11).

14. Cutter arrangement according to at least one of the preceding claims 1 to 13, characterised in that a position of the lift table or lift carriage (10) beneath the cutter table (5) is securable during a cutting procedure by a locking device.

15. Cutter arrangement according to at least one of claims 1 to 14, characterised in that the lift carriage (10) has on a base frame sub-assembly (13), four heavy-duty rollers (14) and in conjunction with the support plate (11) supported on the base frame sub-assembly (13), three spindle lift members (12a, 12b, 12c) and a drive device (15, 16, 17) for the spindle lift members (12a, 12b, 12c).

16. Cutter arrangement according to claim 15, characterised in that the drive device has a three-phase motor (15) in conjunction with a spindle-operated lift member (12b) and a bevel gearing (16), which is connected via a pair of universal joint shafts (17) to the further spindle lift members (12a, 12c).

17. Cutter arrangement according to claim 15 or 16, characterised in that the spindle lift members (12a, 12b, 12c) are disposed at the corners of an equilateral triangle.

18. Method of cutting into slices a soil sample container in a sample container, especially for soil monoliths with growth after their removal from an open land lysimeter installation, characterised in that the sample container (1) is mounted on a separating device (7) which is provided in conjunction with a cutter table (5), is at first closed, and which closes off the sample-holding opening (9), the sample container (1) is then opened at the bottom, and the separator device (7) is withdrawn laterally from beneath the soil sample, so that the soil sample (3), partly accommodated in the sample-holding opening (9), is received on a support plate (11) located thereunder, the support plate (11) is lowered by a distance corresponding to the thickness of the soil layer (2) to be cut off, and then, by lateral insertion of the separator device, the bottom soil layer (2) is separated from the soil sample (3), the soil layer (2) being transported with the support plate (11) out of the region beneath the separator device.

19. Method according to claim 18, characterised in that the soil layer (2) of the soil sample |(3) is received on the support plate (11), the soil layer (2) being simultaneously laterally guided.

20. Method according to claim 18 or 19, characterised in that the support plate (11) is disposed beneath the separator device (7) at a spacing therefrom, and the separator device (7) has a pair of cutter plates (7a, 7b) movable in a translatory manner relative to one another, by means of which, after lateral opening, the base layer (2) of the soil sample (3) is passed downwards through the sample-holding opening (9) on to the support plate (11), and is there peripherally received, the pair of cutter plates (7a, 7b) then being pushed towards one another as far as a stop means for the cutter plates (7a, 7b), cutting the soil layer (2) from the remaining soil sample (3), the support plate (11), with the soil layer (2), then being lowered and transported away.

## Revendications

1. Dispositif de coupe pour des échantillons de sol, avec un bâti de base, un dispositif récepteur pour l'échantillon de sol, ainsi qu'un dispositif de séparation pour séparer une tranche de l'échantillon de sol, notamment pour des monolithes de sol provenant d'un lysimètre "de plein champ", **caractérisé** par une table de coupe stationnaire (5) avec un ensemble de plaques de coupe (7), pour recevoir un récipient d'échantillon (1) contenant l'échantillon de sol (3) et présentant un socle démontable (1b), et par un dispositif de dépose (10) réglable en hauteur, disposé en dessous de l'ensemble de plaques de coupe (7) pour y déposer l'échantillon de sol (3).

2. Dispositif de coupe selon la revendication 1, **caractérisé** en ce qu'une bague de centrage (8) est assemblée à la table de coupe (5) au-dessus de l'ensemble de plaques de coupe (7), afin de centrer au milieu sur l'ensemble de plaques de coupe (7) le récipient d'échantillon (1) contenant l'échantillon de sol (3).

3. Dispositif de coupe selon la revendication 1 ou 2, **caractérisé** en ce que l'ensemble de plaques de coupe (7) présente deux plaques de coupe (7a, 7b) en opposition.

4. Dispositif de coupe selon l'une quelconque des revendications 1 à 3, **caractérisé** en ce que les plaques de coupe (7a, 7b) sont guidées, notamment par des glissières de guidage qui leur sont assemblées par soudage, dans un ensemble de profilés de la table de coupe (5) au-dessus d'un plateau de table (18) du bâti de base (6).

5. Dispositif de coupe selon l'une quelconque des revendications 1 à 4, **caractérisé** en ce qu'une ouverture (9) de réception d'échantillon est configurée en dessous de l'ensemble de plaques de coupe (7) dans un plateau de table (18) de la table de coupe (5).

6. Dispositif de coupe selon la revendication 5, **caractérisé** en ce que la configuration de l'ouverture (9) de réception d'échantillon correspond à la configuration du récipient d'échantillon (1).

7. Dispositif de coupe selon l'une quelconque des revendications 1 à 6, **caractérisé** en ce que le récipient d'échantillon (1) est un corps tubulaire hexagonal avec un cylindre (1a) et un socle perforé (1b).

8. Dispositif de coupe selon la revendication 7, **caractérisé** en ce que le socle (1b) peut être assemblé de façon détachable au cylindre (1a) du récipient d'échantillon (1) par des équerres de montage (4).

9. Dispositif de coupe selon l'une quelconque des revendications 1 à 8, **caractérisé** en ce que le dispositif de dépose est une table élévatrice ou un chariot élévateur mobile (10).

10. Dispositif de coupe selon la revendication 9, **caractérisé** en ce que le dispositif de dépose présente une plaque porteuse (11) au moins verticalement mobile, qui s'appuie sur un dispositif de levage, de préférence un dispositif de levage à vis (12).

11. Dispositif de coupe selon la revendication 10, **caractérisé** en ce qu'une bague de soutien est prévue sur la plaque porteuse (11) pour recevoir la tranche de sol (2) séparée de l'échantillon de sol (3).

12. Dispositif de coupe selon la revendication 11, **caractérisé** en ce que la bague de soutien présente une configuration qui correspond à celle de l'ouverture (9) de réception d'échantillon et du récipient d'échantillon (1).

13. Dispositif de coupe selon l'une quelconque des revendications 1 à 12, **caractérisé** en ce que le dispositif de dépose (10) présente un dispositif de mesure et d'affichage pour le réglage en hauteur de la plaque porteuse (11).

14. Dispositif de coupe selon l'une quelconque des revendications 8 à 13, **caractérisé** en ce qu'un dispositif de verrouillage permet de bloquer une position de la table élévatrice ou du chariot élévateur (10) en dessous de la table de coupe (5) pendant un processus de coupe.

15. Dispositif de coupe selon l'une quelconque des revendications 8 à 14, **caractérisé** en ce que le chariot élévateur (10) présente quatre roues (14) sur une partie inférieure (13) de châssis et, en raccordement à la plaque porteuse (11) et s'appuyant sur la partie inférieure (13) de châssis, trois éléments de levage à vis (12a, 12b, 12c) ainsi qu'un dispositif d'entraînement (15, 16, 17) pour les éléments de levage à vis (12a, 12b, 12c).

16. Dispositif de coupe selon la revendication 15, **caractérisé** en ce que le dispositif d'entraînement présente un moteur triphasé (15) raccordé à un élément de levage à vis (12b), et un engrenage conique (16) qui est raccordé aux autres éléments de levage à vis (12a, 122c) par une paire d'arbres de transmission (17).

17. Dispositif de coupe selon la revendication 15 ou 16, **caractérisé** en ce que les éléments de levage à vis (12a, 12b, 12c) sont disposés dans les coins d'un triangle isocèle.

18. Procédé pour découper en tranches un échantillon de sol contenu dans un récipient d'échantillon, notamment pour des monolithes de sol naturel prélevés d'un lysimètre "de plein champ", **caractérisé** en ce qu'on pose le récipient d'échantillon (1) sur un dispositif de séparation (7) initialement fermé, qui est prévu conjointement avec une table de coupe (5) et qui ferme une ouverture (9) de réception d'échantillon, puis on ouvre le fond du récipient d'échantillon (1) et on éloigne le dispositif de séparation (1) d'en dessous de l'échantillon de sol, en le tirant latéralement, de sorte que l'échantillon de sol (3) est, en étant partiellement reçu dans l'ouverture (9) de réception d'échantillon, reçu sur une plaque porteuse (11) qui se trouve en dessous de cette ouverture, on abaisse la plaque porteuse (1) d'une hauteur correspondant à l'épaisseur de la tranche de sol (2) à séparer, puis on sépare la tranche de sol inférieure (2) de l'échantillon de sol (3) en rentrant latéralement le dispositif de séparation, et enfin on évacue la tranche de sol (2) avec la plaque porteuse (11) d'en dessous du dispositif de séparation.

19. Procédé selon la revendication 18, **caractérisé** en ce que la tranche de sol (2) de l'échantillon de sol (3) est reçue sur la plaque porteuse (11) avec un guidage latéral simultané de la tranche de sol (2).

20. Procédé selon la revendication 18 ou 19, **caractérisé** en ce que la plaque porteuse (11) est disposée en dessous du dispositif de séparation (7) à distance de ce dernier, et le dispositif de séparation (7) présente une paire de plaques de coupe (7a, 7b) déplaçables en opposition l'une par rapport à l'autre par translation, après écartement latéral desquelles la tranche de sol (2) de l'échantillon de sol (3) est dirigée vers le bas sur la plaque porteuse (11) en passant par l'ouverture (9) de réception d'échantillon, et est reçue par sa périphérie sur la plaque porteuse (11), la paire de plaques de coupe (7a, 7b) étant ensuite rentrée jusqu'à ce que les plaques de coupe (7a, 7b) butent l'une contre l'autre, la tranche de sol (2) étant alors séparée du reste de l'échantillon de sol (3), à la suite de quoi la plaque porteuse (11) pourvue de la tranche de sol (2) est abaissée et évacuée.
